# FASCICULE DE BREVET EUROPEEN

(11) **EP 2 147 419 B1**
(45) Date de publication et mention de la délivrance du brevet: **26.10.2011**
(21) Numéro de dépôt: 08805684.1
(22) Date de dépôt: 22.04.2008
(51) Int. Cl.: G08B 13/183

(54) **DISPOSITIF ET PROCEDE DE PROTECTION CONTRE LES INTRUSIONS DANS LES LOGEMENTS DE TRAIN D'UN AERONEF**
VORRICHTUNG UND VERFAHREN ZUM SCHUTZ VOR EINDRINGUNGEN IN DAS FAHRWERKGEHÄUSE EINES FLUGZEUGS
DEVICE AND METHOD FOR PROTECTION AGAINST INTRUSION INTO THE LANDING GEAR HOUSING OF AIRCRAFT

(30) Priorité: 23.04.2007 FR 0754642
(43) Date de publication de la demande: 27.01.2010
(73) Titulaire: Airbus Operations (Société par actions simplifiée), 31060 Toulouse (FR)
(72) Inventeur: PUJOL, Olivier, F-31530 Montaigut sur Save (FR)
(74) Mandataire: Maupilier, Didier
(86) Numéro de dépôt international: PCT/FR2008/050729
(87) Numéro de publication internationale: WO 2008/145922

(56) Documents cités:
- EP-A- 1 843 176
- FR-A- 2 775 534
- FR-A- 2 893 169

## Description

La présente invention concerne un dispositif et un procédé d'alerte en cas d'introduction de corps étrangers dans les logements de train d'aéronefs.

II arrive que des migrants clandestins risquent leur vie en embarquant dans les logements de train d'atterrissage d'avions de ligne sur des trajets internationaux.

Le manque d'oxygène et la température inférieure à -40°C critique en altitude, rend ce trajet dans la plupart des cas extrêmement dangereux, voir mortel. L'expérience montre que très peu de passagers clandestins ont survécu à ce type de trajet.

Paradoxalement, il est relativement facile de se hisser à bord des aéronefs à l'aide de la cinématique des logements de train.

Ce risque est en outre accru dans des aéroports où la surveillance des alentours est très réduite, ce qui facilite l'accès du clandestin à l'aéronef.

Les compagnies aériennes font en générale une inspection des logements de train lors du tour de l'avion avant décollage, mais cette inspection est inefficace pour deux raisons :
- sur certains gros porteurs, l'espace réservé au logement de train est immense et l'inspection rendue difficile à cause des nombreux recoins, surtout si cette inspection est faite de nuit;
- l'expérience montre enfin que la plupart des clandestins montent lors de la phase de décollage notamment lors de l'alignement de l'avion avant la mise des gaz.

De plus beaucoup de décollage d'avions de ligne à partir des pays à fort taux d'émigration s'effectuent de nuit, ce qui rend encore plus difficile le repérage des volontaires pour passage clandestin.

Une autre problématique est liée à l'aspect sûreté dans le sens où la facilité d'accès aux logements de train avant le décollage et la difficulté d'inspection peut constituer un risque pour la sécurité du vol.

Le document EP 1 843 176, publié le 10.10.2007 divulgue un système de detection d'intrusion dans les trains d'attérissage d'aéronefs.

L'objectif de la présente invention est de proposer un système permettant de protéger l'avion contre des intrusions potentielles, non seulement pour sauver la vie des personnes souhaitant s'introduire dans les logements de train d'atterrissage, mais aussi pour améliorer la sûreté des aéronefs.

Pour ce faire la présente invention prévoit un dispositif et un procédé de protection contre les intrusions dans des logements de trains d'atterrissage d'un aéronef selon les revendications 1 et 7.

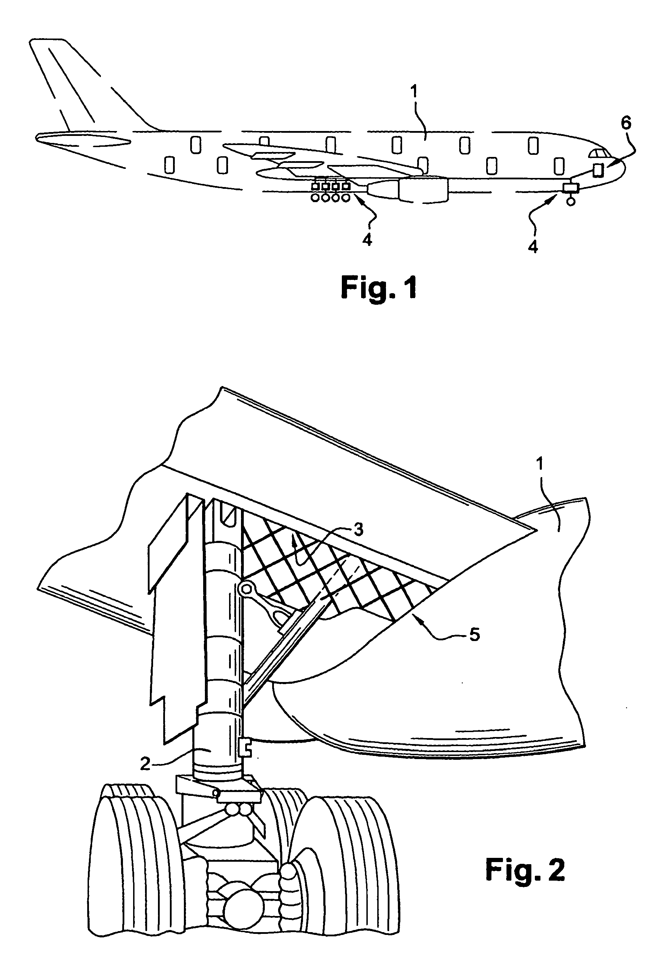

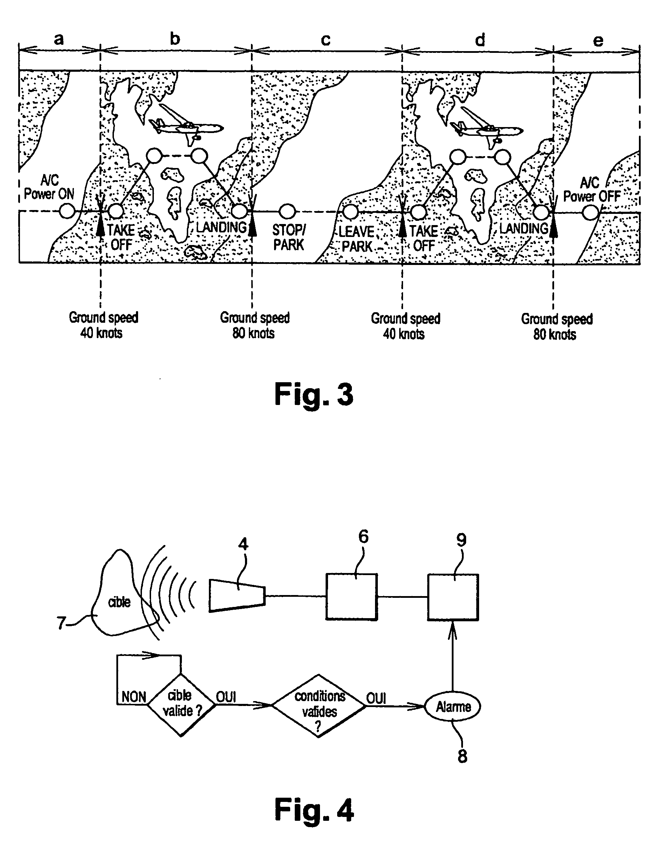

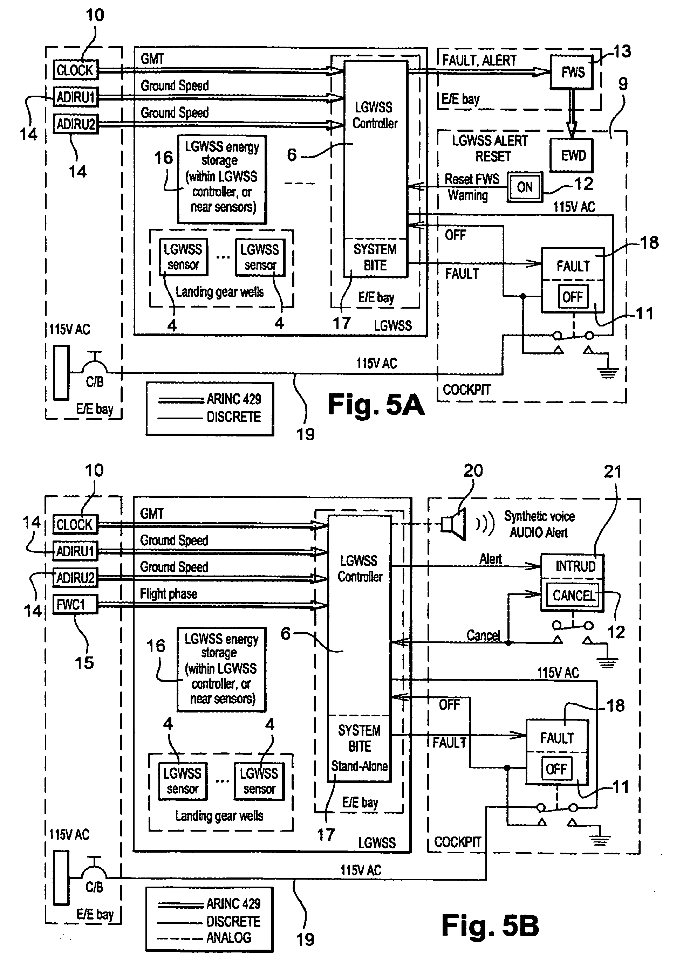

D'autres caractéristiques et avantages de l'invention seront apparents à la lecture de la description qui suit d'exemples de réalisation non limitatifs en référence aux dessins qui représentent:
en figure 1: une vue schématique d'un aéronef équipé d'un dispositif selon l'invention;
en figure 2: un détail d'une trappe de train d'aéronef et de la zone d'entrée du logement de train;
en figure 3: une représentation schématiques des phases de vol et des phases de fonctionnement d'un dispositif selon l'invention;
en figure 4: un schéma simplifié d'un dispositif selon l'invention;
aux figures 5A et 5B: des schémas blocs d'exemples d'intégration d'un dispositif selon l'invention dans une architecture avionique.

Selon les figures 1 et 2, le dispositif de protection contre les intrusions dans les logements 3 de trains d'atterrissage 2 d'un aéronef 1 selon l'invention comprend pour au moins un logement de train au moins un capteur 4, de couverture d'au moins une zone d'entrée du logement, relié à un calculateur 6 adapté à traiter les données issues du capteur 4.

Le but du système n'est pas d'effectuer une surveillance de zone, ici en l'occurrence les logements de train, mais plutôt de se comporter comme un système anti-intrusion.

Préférablement, le dispositif de protection selon la figure 1 comprend une pluralité de capteurs 4 embarqués à l'intérieur des logements de trains et pourvus de zones de détection tournées vers l'extérieur des logements de train.

La figure 2 illustre en hachuré un exemple de zone d'entrée 5 d'un logement de train d'atterrissage d'un aéronef, cette zone d'entrée constituant la zone à surveiller de façon privilégiée.

Le dispositif selon l'invention utilise des capteurs embarqués du type capteur infra-rouge ou radar ou laser ou du type système de vidéo intelligente utilisant une détection de mouvement ou une combinaison de plusieurs technologies comme notamment la combinaison de capteur radar et infra-rouge pour fournir, comme représenté en figure 4 des données adaptées pour détecter l'intrusion d'une cible 7 et à générer une information de présence ou d'absence d'intrusion adaptée à déclencher une alarme 8.

Dans le cas où les capteurs sont de type infra-rouges, ils peuvent être disposés en sorte de surveiller l'intérieur du logement de train.

Dans le cas où les capteurs sont de type capteur radar, les capteurs disposés à l'intérieur du logement ont leur zone de couverture dirigée vers l'ouverture du logement et peuvent aisément voir leur portée de détection limitée à la zone intérieure du logement de train surtout dans le cas où ce sont des capteurs pourvus d'une électronique de détection qui va annuler les échos correspondant à des personnes ou objets en mouvement à distance de l'entrée du logement de train.

Cette technologie radar est particulièrement adaptée car elle permet de limiter la portée de détection à la zone intérieure du logement de train et d'éviter ainsi des alarmes intempestives.

Le principe de l'invention est que le ou les capteurs 4 émettent vers le calculateur 6 des données représentatives de la présence ou non d'un élément en mouvement au niveau de l'entrée du logement de train, que le calculateur traite ces données pour valider que la cible détectée correspond à une intrusion et que, en fonction de la validité de conditions d'environnement telles que la vitesse sol ou les phases de vol de l'appareil, le calculateur déclenche ou non l'alarme 8 selon qu'il détermine que les conditions d'environnement sont telles que la détection doit être considérée comme valide ou non.

Dans le cadre de l'invention le capteur 4 peut être un capteur simple, qui envoie en continu des données de type analogiques, telles qu'une mesure thermique dans le cas d'un capteur infra-rouge, une trame vidéo dans le cas d'un capteur vidéo, le calculateur comportant en interne les moyens de traitement adaptés à détecter et différencier une intrusion d'une mesure normale.

Le capteur 4 peut aussi être un capteur pourvu d'une électronique de détection et de mise en forme de sorte que le capteur envoie alors au calculateur des données représentatives d'une intrusion lorsque une cible valide a été détectée.

Dans ce dernier cas, les capteurs peuvent envoyer des données de type trame informatique et être reliés en parallèle sur un bus de communication de type bus informatique ce qui simplifie le câblage du dispositif et permet même de relier les capteurs 4 et le calculateur 6 au travers d'un bus de communication préexistant de l'aéronef.

Le dispositif de protection selon l'invention est tel que le calculateur 6 est relié à un dispositif 9 de fourniture d'informations de phases de vol de l'aéronef.

Les figures 5A et 5B qui sont décrites ci-après correspondent à deux modes de réalisation de l'invention selon que le calculateur 6 est relié à un dispositif centralisé ou non.

La figure 5A correspond à un exemple de réalisation pour lequel le dispositif de fourniture d'informations comprend un dispositif d'alarme centralisé 13 de gestion des alarmes générées à bord de l'aéronef, effectuant une gestion des priorités d'alarmes et adapté à masquer certains types d'alarmes pendant des phases critiques telles que le décollage et l'atterrissage de l'aéronef et auquel est relié le calculateur 6.

la figure 5B à un mode de réalisation pour lequel le dispositif de l'invention comporte ses propres moyens de visualisation, le dispositif de fourniture d'informations 9 étant un panneau du cockpit regroupant des informations d'alarmes.

En référence à la figure 5A, le dispositif de l'invention est relié en entrée à plusieurs équipements.

Il est d'une part relié à des calculateurs 14 (ADIRU: Air Data Inertial Reference Unit selon la terminologie anglo-saxonne) qui sont des calculateurs embarqués qui fournissent un grand nombre de données références à l'avionique dont notamment la vitesse sol ( Ground speed) de l'avion.

Les ADIRU 1 et 2 envoient la vitesse sol au calculateur 6. Cette vitesse sol permet de changer le statut de détection du dispositif en mode inactif ou en mode actif. L'ADIRU1 est utilisé en tant que source primaire, l'ADIRU2 est utilisé en mode dégradé en cas de perte de l'ADIRU1.

Le calculateur 6 de l'invention comporte sa propre horloge interne et est en outre relié à un générateur horloge avion CLOCK 10 fournissant l'heure GMT permettant de synchroniser l'horloge interne du dispositif de l'invention.

Le calculateur 6 comporte une unité 17 (BITE: Built In test Equipment) système de test automatique, répondant à des normes avioniques et intégré aux calculateurs de l'avionique, adaptée à transmettre un message d'erreur (FAULT) en cas de défaillance dudit calculateur pour allumer un témoin d'erreur 18 au niveau du cockpit.

Cette unité réalise des étapes d'auto test du dispositif et permet une visualisation en cas de détection de défauts.

Le calculateur 6 est relié en sortie à un équipement centralisé de gestion des alarmes avion (FWS: Flight Warning System) partie d'un système centralisé de gestion des alarmes avion (ECAM: Electronic Centralised Aircraft Monitoring) comportant un écran 9 de contrôle des alarmes (EWD: ECAM Warning Display).

Le dispositif de l'invention doit informer les pilotes ou la maintenance notamment en cas d'intrusion de nuit.

Selon l'exemple de la figure 5A, ces informations sont relayées par le système centralisé 13 nommé FWS.

Ce système gère toutes les alarmes générées à bord et effectue aussi une gestion des priorités afin qu'il n'y ait pas superposition d'alarme. Par exemple, une alarme de niveau d'huile ne viendra jamais en superposition d'une alarme feu moteur qui est beaucoup plus critique.

En plus de cette gestion du niveau de criticité, le FWS masque certain type d'alarme pendant les phases critiques comme le décollage et l'atterrissage.

Tous les avions de ligne sont équipés de ce système centralisé d'alarme. Cependant, les standards du FWS varient en fonction des types d'avion. Par exemple, pour qu'un un nouveau système se connecte directement au FWS, il faut que le FWS soit équipé du standard adéquat afin de reconnaître ce nouveau système.

Dans le cas de la figure 5A, le FWS est équipé du bon standard et dans ce cas le dispositif de l'invention peut y être connecté.

Le calculateur 6 du dispositif de l'invention envoie au FWS les informations suivantes:
- la ou les alerte(s);
- la localisation de l'alerte (train central, train latéral gauche, train avant, etc..)
- ses messages de panne.

En cas de détection d'une panne, le calculateur 6 éclaire aussi le voyant 18 FAULT dans le cockpit.

Toujours selon la figure 5A, le dispositif comprend en outre un bouton marche/arrêt 11 bi-stable localisé dans le cockpit et relié au calculateur 6.

Ce bouton permet de couper complètement le système en cas de panne majeure ou tout simplement si l'opérateur ne souhaite pas utiliser le système (en cas de maintenance par exemple).

Enfin, le dispositif comprend en outre un bouton mono stable 12 localisé dans le cockpit et relié au calculateur 6 pour couper et remettre l'alarme à zéro.

Le dispositif de l'invention est préférablement équipé d'une source d'énergie propre rechargeable 16 afin de pouvoir fonctionner de façon complètement indépendante. Cela peut-être une batterie, un super-condensateur ou autre. Cette source d'énergie propre est rechargée par la génération électrique 19 de l'avion (115VAC par exemple).

Dans le cas de la figure 5B, le FWS n'a pas le bon standard et la génération d'alarme à partir du dispositif de l'invention est faite par un moyen non centralisé.

De ce fait, le dispositif de l'invention est préférablement pourvu de deux architectures, la première intégrée avec connexion au FWS, la deuxième en mode autonome avec une génération d'alarme spécifique sans passer par le FWS.

Afin de palier à l'absence de connexion au FWS qui gère un certain nombre de priorité comme expliqué ci-dessus, il faut rajouter une connexion spécifique qui permette d'être sûr que le système est coupé lors des phases de décollage (même en cas de pannes de ADIRU) et qu'il n'y a pas de superposition d'alarme lors de phase critique.

A cet effet, une connexion supplémentaire est ajoutée en entrée avec un des calculateurs de gestion des messages d'alerte et des paramètres de vol 15 du système avionique dénommé FWC (Flight Warning Computer) qui donne notamment les phases de vol avion.

Une telle connexion ne nécessite aucun standard spécifique puisque dans ce cas là, on vient chercher une information, en l'occurrence ici les phases de vols.

Le FWC1 émet des données représentatives des phases de vol et ces données sont reçues et traitées par le calculateur du dispositif de l'invention en sorte de changer le statut de détection du dispositif de inactif à actif en fonction des phases de vol.

Le dispositif est en outre connecté aux ADIRU1 et 2 utilisés en sauvegarde du FWC1 (en cas de panne du FWC1 en vol par exemple).

Comme pour le dispositif de la figure 5A, le dispositif de la figure 5B comprend un bouton de mise hors fonction (bouton OFF) bi-stable localisé dans le cockpit qui permet de couper complètement le système.

Il comprend aussi un bouton mono stable localisé dans le cockpit permettant de couper et de remettre l'alarme à zéro ainsi que d'éteindre le voyant lumineux dans le cockpit et l'alarme audio 20.

Dans le cas de la figure 5B le dispositif comprend un voyant lumineux spécifique (INTRUD Light) 21 qui s'allume en cas de détection d'intrusion et génère par l'intermédiaire d'un haut-parleur spécifique localisé dans le cockpit (voix synthétique par exemple) une alarme sonore 20 en cas d'intrusion.

Il comporte enfin le voyant FAULT 18 dans le cockpit qui s'allume en cas de panne.

Aussi, le dispositif comporte, dans un cas comme dans l'autre, des moyens adaptés à changer son statut de détection, d'un mode actif à un mode inactif, en fonction des informations de phases de vol au travers des données fournies par les calculateurs ADIRU ou FWC.

En particulier, dans le cas du fonctionnement autonome de la figure 5B, le calculateur 6 lui même comporte les moyens de prise en compte de l'information de phase de vol adaptés à activer la détection lorsque l'aéronef est au sol, à désactiver la détection lors de la phase de décollage à partir d'une première vitesse sol donnée et à réactiver la détection lors de l'atterrissage à une seconde vitesse sol alors que dans le cadre de la figure 5A les moyens de prise en compte de l'information sont éventuellement localisés dans le FWS avec des consignes de vitesse particulières au dispositif de l'invention.

La figure 3 représente un exemple d'états du dispositif selon les phases de vol de l'avion.

Dans la phase "a" à partir de la mise sous tension du système (AC power ON) le dispositif est actif jusqu'à ce que l'avion roule à une vitesse par exemple de 20 à 50 noeuds et préférablement de l'ordre de 40 noeuds .

A partir de cette vitesse, le système passe à l'état inactif pendant toute la phase de vol "b" jusqu'à ce que l'avion atterrisse et réduise sa vitesse à une vitesse de l'ordre de 90 à 60 noeuds et par exemple autour de 80 noeuds.

En phase "c" le système est remis en activité pendant toute la phase de roulage à partir du passage de la vitesse au dessous de 80 noeuds, pendant la phase d'arrêt au parking pour le réapprovisionnement en carburant, le débarquement et l'embarquement des passagers et jusqu'au nouveau décollage et une vitesse atteinte de 40 noeuds.

En phase "d" phase de vol, le système est de nouveau inactivé et de retour au sol, phase "e", à une vitesse inférieure à 80 noeuds jusqu'à la coupure de l'alimentation électrique (AC power OFF) le système est remis en activité.

Comme décrit précédemment, les capteurs 4 et le calculateur 6 sont avantageusement reliés au travers d'un bus avionique de l'aéronef et en particulier au travers d'un bus répondant à la norme ARINC 429, l'aéronef comprenant une pluralité de capteurs 4 et au moins un calculateur 6 reliés au travers du bus avionique.

Le procédé de détection d'intrusion dans au moins un logement 3 de train d'atterrissage 2 d'un aéronef 1 avec le dispositif décrit ci-dessus comprend ainsi une surveillance de la zone d'entrée du logement avec un dispositif comportant au moins un capteur relié à un calculateur de détection et de validation, un traitement les données issues du capteur au niveau du calculateur pour isoler une signature représentative d'une intrusion dans ledit logement, une détermination, de plages de surveillance et de plages d'inactivation en fonction de données issues d'au moins un calculateur avionique émetteur de données représentatives de phases de vol ou de vitesse sol de l'aéronef, un déclenchement d'alarme lorsqu'une détection d'intrusion est détectée et que les données représentatives de phases de vol ou de vitesse sol sont déterminées comme compatibles avec la plage de surveillance.

Dans le cas vu précédemment pour lequel le dispositif est autonome, on réalise la détermination des plages d'activation de la surveillance et d'inactivation de la surveillance sont réalisées au niveau du calculateur de détection et de validation.

Dans le cas où le calculateur du dispositif est raccordé à un calculateur de regroupement d'alarmes de type LWS gérant les alarmes et les priorités, le calculateur de détection et de validation transmet des donnée de détection d'intrusion au calculateur de regroupement d'alarmes et on effectue la détermination des plages d'activation de la surveillance et d'inactivation de la surveillance et on valide ou non la ou les alarmes générées par le calculateur du dispositif au niveau du calculateur de regroupement d'alarme.

Le dispositif selon l'invention sera dénommé dans le language technique aéronautique LGWSS pour Landing Gear Well Surveillance System selon la terminologie anglo-saxonne.

L'invention n'est pas limitée aux exemples représentés et notamment, le dispositif adapté pour les logements de trains d'atterrissage qui restent ouverts pendants toutes les phases où l'avion est au sol peut être complété par des capteurs de détection d'intrusions dans d'autres logements de l'aéronef tout en restant dans le cadre de l'invention.

## Revendications

1. Dispositif de protection contre les intrusions dans des logements (3) de trains d'atterrissage (2) d'un aéronef (1) comprenant au moins un capteur (4), pour au moins un logement, de couverture d'au moins une zone (5) d'entrée du logement, relié à un calculateur (6) adapté à traiter les données issues du capteur (4) pour détecter l'intrusion d'une cible (7) et à générer une information de présence d'intrusion adaptée à déclencher une alarme (8), pour lequel le calculateur (6) est relié à un dispositif (9) de fourniture d'informations de phases de vol et de vitesse sol de l'aéronef, ledit dispositif de protection comportant des moyens adaptés à changer le statut de détection, d'un mode actif à un mode inactif, en fonction desdites informations de phases de vol et de vitesse sol et pour lequel le calculateur (6) comporte des moyens de prise en compte de l'information de phase de vol et de vitesse sol, adaptés à activer lesdits moyens adaptés à changer le statut de détection en sorte d'activer la détection lorsque l'aéronef est au sol, à désactiver la détection lors de la phase de décollage à partir d'une première vitesse sol donnée et à réactiver la détection lors de l'atterrissage à une seconde vitesse sol.

2. Dispositif de protection selon la revendication. 1 **caractérisé en ce qu**'il comprend un bouton marche/arrêt (11) bi-stable localisé dans le cockpit et relié au calculateur (6).

3. Dispositif de protection selon la revendication 1 ou 2 **caractérisé en ce que** le calculateur (6) est relié à un dispositif d'alarme centralisé (13), de gestion des alarmes générées à bord de l'aéronef, effectuant une gestion des priorités d'alarmes et adapté à masquer certains types d'alarmes pendant des phases critiques telles que le décollage et l'atterrissage de l'aéronef.

4. Dispositif de protection selon l'une des revendications précédentes **caractérisé en ce qu'**il comprend une pluralité de capteurs (4) embarqués à l'intérieur des logements et pourvus de zones de détection tournées vers l'extérieur des logements.

5. Dispositif de protection selon l'une des revendications précédentes **caractérisé en ce que** les capteurs embarqués sont du type radar à portée de détection limitée à la zone intérieure du logement de train.

6. Aéronef équipé d'un dispositif de protection selon l'une des revendications précédentes.

7. Procédé de détection d'intrusion dans au moins un logement (3) de train d'atterrissage (2) d'un aéronef (1) comprenant :
- une surveillance de la zone d'entrée du logement avec un dispositif comportant au moins un capteur relié à un calculateur de détection et de validation;
- un traitement les données issues du capteur au niveau du calculateur pour isoler une signature représentative d'une intrusion dans ledit logement,
- un déclenchement d'alarme lorsqu'une intrusion est détectée,
- une détermination, de plages d'activation de la surveillance et de plages d'inactivation de la surveillance en fonction de données issues d'au moins un calculateur avionique émetteur de données représentatives de phases de vol et de vitesse sol de l'aéronef, et,
- une validation de l'alarme lorsque les données représentatives de phases de vol ou de vitesse sol sont déterminées comme compatibles avec la plage d'activation de la surveillance,
et selon lequel la surveillance est activée lorsque l'aéronef est au sol, la surveillance est désactivée lors de la phase de décollage à partir d'une première vitesse sol donnée et la surveillance est réactivée lors de l'atterrissage à une seconde vitesse sol.

8. Procédé de détection d'intrusion dans au moins un logement (3) de train d'atterrissage (2) d'un aéronef (1) selon la revendication 7 pour lequel la détermination des plages d'activation de la surveillance et d'inactivation de la surveillance sont réalisées au niveau du calculateur de détection et de validation.

9. Procédé de détection d'intrusion dans au moins un logement (3) de train d'atterrissage (2) d'un aéronef (1) selon la revendication 7 pour lequel le calculateur de détection et de validation transmet des donnée de détection d'intrusion à un calculateur de regroupement d'alarmes et pour lequel le calculateur de regroupement d'alarme effectue la détermination des plages d'activation de la surveillance et d'inactivation de la surveillance et valide ou non l'alarme.

## Claims

1. Device for protection against intrusions into housings (3) of landing gear (2) of an aircraft (1) comprising at least one sensor (4), for at least one housing, for covering at least one inlet zone (5) of the housing, linked to a computer (6) suitable for processing the data arising from the sensor (4) so as to detect the intrusion of a target (7) and for generating an intrusion presence indication suitable for triggering an alarm (8), for which the computer (6) is linked to a device (9) for providing indications of flight phases and of ground speed of the aircraft, said protection device comprising means suitable for changing the detection status, from an active mode to an inactive mode, as a function of said indications of flight phases and of ground speed and for which the computer (6) comprises means for considering the indication of flight phase and of ground speed, suitable for activating said means suitable for changing the detection status so as to activate detection when the aircraft is on the ground, for deactivating detection during the take-off phase onwards of a given first ground speed and for reactivating detection during landing at a second ground speed.

2. Protection device according to Claim 1, **characterized in that** it comprises a bi-stable on/off button (11) located in the cockpit and linked to the computer (6).

3. Protection device according to Claim 1 or 2, **characterized in that** the computer (6) is linked to a centralized alarm device (13), for managing the alarms generated onboard the aircraft, performing management of the priorities of alarms and suitable for masking certain types of alarms during critical phases such as the take-off and landing of the aircraft.

4. Protection device according to one of the preceding claims, **characterized in that** it comprises a plurality of sensors (4) embedded inside the housings and provided with detection zones pointing outwards from the housings.

5. Protection device according to one of the preceding claims, **characterized in that** the embedded sensors are of the radar type with detection range limited to the interior zone of the gear housing.

6. Aircraft equipped with a protection device according to one of the preceding claims.

7. Method for detecting intrusion into at least one housing (3) of landing gear (2) of an aircraft (1) comprising:
- surveillance of the inlet zone of the housing with a device comprising at least one sensor linked to a detection and validation computer;
- processing of the data arising from the sensor by the computer so as to isolate a signature representative of an intrusion into said housing,
- alarm triggering when an intrusion is detected,
- determination of surveillance activation slots and surveillance inactivation slots as a function of data arising from at least one avionics computer transmitting data representative of flight phases and of ground speed of the aircraft, and
- validation of the alarm when the data representative of flight phases or of ground speed are determined as being compatible with the surveillance activation slot,
and according to which the surveillance is activated when the aircraft is on the ground, the surveillance is deactivated during the take-off phase onwards of a given first ground speed and the surveillance is reactivated during landing at a second ground speed.

8. Method for detecting intrusion into at least one housing (3) of landing gear (2) of an aircraft (1) according to Claim 7 for which the determination of the surveillance activation and surveillance inactivation slots is carried out by the detection and validation computer.

9. Method for detecting intrusion into at least one housing (3) of landing gear (2) of an aircraft (1) according to Claim 7 for which the detection and validation computer transmits intrusion detection data to a computer for grouping alarms and for which the alarm grouping computer performs the determination of the surveillance activation and surveillance inactivation slots and validates or invalidates the alarm.

## Patentansprüche

1. Schutzvorrichtung gegen das Eindringen in Gehäuse (3) von Fahrwerken (2) eines Luftfahrzeugs (1), die mindestens einen Sensor (4) für mindestens ein Gehäuse zur Abdeckung mindestens eines Eingangsbereichs (5) des Gehäuses enthält, der mit einem Rechner (6) verbunden ist, welcher geeignet ist, um die vom Sensor (4) stammenden Daten zu verarbeiten, um das Eindringen eines Objekts (7) zu erfassen und eine Information des Vorhandenseins eines Eindringens zu erzeugen, die einen Alarm (8) auslösen kann, wobei der Rechner (6) mit einer Vorrichtung (9) zum Liefern von Flugphasen- und Bodengeschwindigkeitsinformationen des Luftfahrzeugs verbunden ist, wobei die Schutzvorrichtung Einrichtungen aufweist, die abhängig von den Flugphasen- und Bodengeschwindigkeitsinformationen den Erfassungsstatus von einem aktiven Modus in einen inaktiven Modus ändern können, und wobei der Rechner (6) Einrichtungen zur Berücksichtigung der Flugphasen- und Bodengeschwindigkeitsinformation aufweist, die geeignet sind, um die Einrichtungen zu aktivieren, die den Erfassungsstatus ändern können, um die Erfassung zu aktivieren, wenn das Luftfahrzeug am Boden ist, die Erfassung in der Startphase ausgehend von einer ersten gegebenen Bodengeschwindigkeit zu deaktivieren, und die Erfassung beim Landen bei einer zweiten Bodengeschwindigkeit zu reaktivieren.

2. Schutzvorrichtung nach Anspruch 1, **dadurch gekennzeichnet, dass** sie eine bistabile Ein/Aus-Taste (11) enthält, die im Cockpit angeordnet und mit dem Rechner (6) verbunden ist.

3. Schutzvorrichtung nach Anspruch 1 oder 2, **dadurch gekennzeichnet, dass** der Rechner (6) mit einer zentralisierten Alarmvorrichtung (13) zur Verwaltung der an Bord des Luftfahrzeugs erzeugten Alarme verbunden ist, die eine Verwaltung der Prioritäten von Alarmen durchführt und geeignet ist, um bestimmte Arten von Alarmen während kritischer Phasen wie dem Start und der Landung des Luftfahrzeugs zu verdecken.

4. Schutzvorrichtung nach einem der vorhergehenden Ansprüche, **dadurch gekennzeichnet, dass** sie eine Vielzahl von Sensoren (4) enthält, die sich im Inneren der Gehäuse befinden und mit Erfassungsbereichen versehen sind, die zur Außenseite der Gehäuse gerichtet sind.

5. Schutzvorrichtung nach einem der vorhergehenden Ansprüche, **dadurch gekennzeichnet, dass** die an Bord befindlichen Sensoren von der Art Radar mit auf den Innenbereich des Fahrwerkgehäuses begrenzter Erfassungsreichweite sind.

6. Luftfahrzeug, das mit einer Schutzvorrichtung nach einem der vorhergehenden Ansprüche ausgestattet ist.

7. Verfahren zur Erfassung des Eindringens in mindestens ein Gehäuse (3) eines Fahrwerks (2) eines Luftfahrzeugs (1), das Folgendes enthält:
- eine Überwachung des Eingangsbereichs des Gehäuses mit einer Vorrichtung, die mindestens einen Sensor aufweist, der mit einem Erfassungs- und Validierungsrechner verbunden ist;
- eine Verarbeitung der vom Sensor stammenden Daten im Rechner, um eine für ein Eindringen in das Gehäuse repräsentative Signatur zu isolieren,
- eine Alarmauslösung, wenn ein Eindringen erfasst wird,
- eine Bestimmung von Aktivierungsbereichen der Überwachung und von Deaktivierungsbereichen der Überwachung abhängig von Daten, die von mindestens einem Flugzeugrechner stammen, der für Flugphasen und Bodengeschwindigkeit des Luftfahrzeugs repräsentative Daten emittiert, und
- eine Validierung des Alarms, wenn die für Flugphasen oder Bodengeschwindigkeit repräsentativen Daten als mit dem Aktivierungsbereich der Überwachung kompatibel ermittelt werden,
und gemäß dem die Überwachung aktiviert wird, wenn das Luftfahrzeug am Boden ist, die Überwachung in der Startphase ausgehend von einer ersten gegebenen Bodengeschwindigkeit deaktiviert wird, und die Überwachung beim Landen bei einer zweiten Bodengeschwindigkeit reaktiviert wird.

8. Verfahren zur Erfassung eines Eindringens in mindestens ein Gehäuse (3) eines Fahrwerks (2) eines Luftfahrzeugs (1) nach Anspruch 7, bei dem die Ermittlung der Bereiche der Aktivierung der Überwachung und der Deaktivierung der Überwachung im Erfassungs- und Validierungsrechner durchgeführt wird.

9. Verfahren zur Erfassung eines Eindringens in mindestens ein Gehäuse (3) eines Fahrwerks (2) eines Luftfahrzeugs (1) nach Anspruch 7, bei dem der Erfassungs- und Validierungsrechner Erfassungsdaten eines Eindringens an einen Rechner zur Gruppierung von Alarmen überträgt, und bei dem der Rechner zur Gruppierung von Alarmen die Ermittlung der Bereiche der Aktivierung der Überwachung und der Deaktivierung der Überwachung durchführt und den Alarm validiert oder nicht.
